# EUROPÄISCHE PATENTSCHRIFT

(11) **EP 2 114 693 B1**
(45) Veröffentlichungstag und Bekanntmachung des Hinweises auf die Patenterteilung: **12.05.2010**
(21) Anmeldenummer: 08715439.9
(22) Anmeldetag: 23.01.2008
(51) Int. Cl.: B60B 1/08, B60C 29/02, B60C 23/00

(54) **FAHRZEUGFELGE MIT ZENTRALEM VENTIL**
VEHICLE RIM COMPRISING A CENTRAL VALVE
JANTE DE VÉHICULE À MOTEUR À VALVE CENTRALE

(30) Priorität: 06.02.2007 DE 102007005764; 30.11.2007 DE 102007058036
(43) Veröffentlichungstag der Anmeldung: 11.11.2009
(73) Patentinhaber: Saadat M. Mohsen, 59494 Soest (DE)
(72) Erfinder: SAADAT Fereshteh, 59494 Soest (DE)
(86) Internationale Anmeldenummer: PCT/DE2008/000117
(87) Internationale Veröffentlichungsnummer: WO 2008/095461

(56) Entgegenhaltungen:
- EP-A- 0 503 296
- EP-A- 0 698 507
- EP-A- 1 216 848
- WO-A-01/17802
- DE-A1- 4 103 644
- DE-A1- 19 961 020
- US-A- 2 900 007
- US-A- 5 313 996

## Beschreibung

Die Erfindung betrifft eine Fahrzeugfelge, vorzugsweise Leichtmetallfelge, bei der das durch Federkraft schließende handelsübliche Druckmediumzufuhr- und Rückschlagventil im Zentrum der Felge, vorzugsweise axial auf der Rotationsachse der Felge, angeordnet ist, wobei das Druckmedium, Luft oder andere Gase, entweder manuell von der Außenseite oder automatisch durch das Fahrzeug selbst von der Fahrzeugachse und Antriebswelle dem Ventil zugeführt wird.

Die Ventile der Fahrzeugfelgen liegen in der Regel am Felgenumfang. Bei der Kontrolle und Befüllen bzw. Entleeren des Reifens liegt das Ventil mal oben gut zugänglich, jedoch mit der Öffnung nach unten, d.h. auf dem Kopf, mal seitlich und mal unten nahe dem Boden und tief im Spalt der Radkappe oder zwischen den Speichen schlecht zugänglich. Dadurch kommt es beim Ansetzen der Druckluftpistole zu einer Querkraft und einem Biegemoment am Halse der Ventilbefestigung am Felgenrand und ihre Reaktionskräfte und Momente belasten die Hand- und Armgelenke. Darüber hinaus erzeugt das Ventil bei der Rotation der Felge eine nicht vernachlässigbare Unwucht. Weiterhin ist es für jedermann leicht zugänglich und manipulierbar. Es sammelt Schmutz und Abrieb um sich und lässt sich nicht leicht reinigen.

Die US-Patentschrift Nr.: 2,900,007 zeigt eine Stahlfelge (24), deren Ventileinheit (56, 60) im Zentrum der Felge gegenüber der Radachse an einer Hülse (38, 40) angeschraubt und mit einer Mutter (58) gesichert ist. Die Hülse (38, 40) ist ihrerseits an einem Stahlbügel (30) und einer Blechverkleidung (62) angeschraubt und mit Hilfe der Mutter (46) gekontert und mit der Halterung (36) gesichert. Die Hülse (38, 40) hat einen Nippel (48), der durch eine schlauchähnliche Leitung (50) mit dem Reifenraum verbunden und durch das Abdeckblech (62) verdeckt wird.

Der Nachteil dieses Prinzips liegt in der relativ großen Anzahl der an der Lösung der Aufgabe beteiligten und fertigungstechnisch nicht einfachen Teile und in der Unwucht, die die Schlauchmasse bei der Rotation erzeugt. Weiterhin ist der mit der Radkappe verdeckte Schlauch nach Abnahme der Radkappe leicht zugänglich und kann versehentlich genauso wie mutmaßlich auf sehr leichte Weise beschädigt werden. Die vorhandene Unwucht wird durch die zusätzlichen Bauteile und den radialen Schlauch weiter vergrößert, da das alte Ventil am Felgenumfang weiterhin existiert.

Die Japanische Patentschrift WO 01/17802 beschreibt eine Felge mit hohl gestalteten Speichen, bei der die hohlen Speichen als Reservebehälter für Druckluft verwendet werden. Das Füllventil (10) ist in der Radnabe axial platziert und an einem manuell betätigten Verteilerventil (8) befestigt, das das Füllventil und das Reifenvolumen je nach Bedarf mit dem Volumen der einzelnen hohlen Speichen verbindet, um den Druckverlust der Reifenluft durch zuvor in den einzelnen Felgenspeichen gespeicherte Druckluft auszugleichen. Der Reifen wird über das manuell betätigte Verteilerventil durch eine hohle Speiche mit Druckluft versorgt.

Die europäische Patentschrift EP 1 216 848 beschreibt eine Leichtmetallfelge, bei der das Füllventil (2a) vom Felgenumfang in den Bereich der Felgennabe, jedoch nicht in die Felgennabe selbst, verlegt und der Luftkanal (4) innerhalb einer einzigen Felgenspeiche (1b) durch Einlegen einer Rohrleitung (2) in die Gußform erzeugt wird.

Die Offenlegungsschrift DE 199 61 020 beschreibt eine Einrichtung zur Reifendruckregulierung, bei der das Reifenventil radial in die Felgennabe mündet und elektronisch fern gesteuert wird.

Die europäische Patentanmeldung EP 0 503 296 beschreibt eine gattungsgemäße Felge mit einem Reifendrucksensor (56), der hinter dem Felgenventil (52) außerhalb der Felgennabe platziert ist. Der Drucksensor (56) ist über Bohrungen in einer der Felgenspeichen mit dem Reifeninnenraum verbunden und überträgt die Signale an den Bordcomputer.

Die Patentschrift US 5,313,996 beschreibt eine Felge, bei der das Reifenventil sich in der Nähe der Befestigungsschrauben der Felge befindet und die Druckluft von dort über einen Durchgang (41) innerhalb einer Speiche zum Reifen gelangt.

Die europäische Patentanmeldung EP 0698507 beschreibt eine Felge mit einem ersten Ringkanal konzentrisch zur Radnabe und einem zweiten Ringkanal im Felgenbett, wobei das Reifenventil (10) am ersten Ringkanal (7) platziert ist und die Luft durch eine hohle Speiche (3) zum zweiten Ringkanal (6) und von dort zum Reifen führt.

Die Offenlegungsschrift DE 41 03 644 beschreibt eine Felge, bei der der Ventilsitz (1) sich zwischen den Radschrauben befindet und die Luft durch einen Luftkanal (2) einer Speiche (5) ins Felgenbett geführt wird.

Demgegenüber liegt der Erfindung die Aufgabe zugrunde, mit einem in der Felgennabe zentral und axial angeordneten Ventil, die Zugänglichkeit des Ventils nahezu unwuchtfrei und unabhängig von der Stellung bzw. Orientierung des Rades besser zu ermöglichen, das Ventil ohne Erzeugung eines Biegemomentes manuell oder automatisch einfacher und sicherer zu bedienen und darüber hinaus dem Fahrzeug selbst die Möglichkeit zu verleihen, seine Reifendrücke mit Hilfe der an Bord befindlichen Komponenten wie z.B. Kompressor, Computer und elektromagnetischen Ventilen selbst zu regulieren und der jeweiligen Fahrbahn- und klimatischen Situation sowie den Witterungsverhältnissen anzupassen.

Diese Aufgabe wird erfindungsgemäß mit den in Anspruch 1 angegebenen Merkmalen gelöst.

Die Unteransprüche stellen vorteilhafte Weiterbildungen der Erfindung dar.

Aufgrund des inmitten der Felgennabe axial angeordneten Ventils bleibt die Lage des Ventils unabhängig von der Radstellung sowohl von der Außenseite für manueller und automatischer Bedienung als auch von der Fahrzeugseite für automatischen Zugriff durch das Fahrzeug gut zugänglich. Bei der Bedienung und Betätigung des Ventils entstehen keine Querkräfte und keine Biegemomente weder am Ventilhals noch am Hand- oder Armgelenk des Bedieners.

In einfachster Ausführung besitzt eine erfindungsgemäße Felge in ihrer zentralen Nabe eine Ventileinheit, in der ein handelsübliches, vorzugsweise mit Federkraft schließendes Rückschlagventil mit seinem Druckluftanschluss nach außen oder zur Radachse hin axial platziert ist und das Druckmedium durch einen radialen Kanal oder durch mehrere Kanäle der Felge in den Reifen geleitet. Die zentrale Ventileinheit wird vorzugsweise mit sternförmigen radialen Rohrleitungen, die das Druckmedium von der Ventileinheit zum Felgenbett führen, vorab gefertigt und als eine komplette Einheit beim Gießen bzw. Spritzen der Felge in die Gussform eingelegt und umspritzt. Damit die zentrale Ventileinheit mit ihren radialen Rohrleitungen beim Gießvorgang der Leichtmetallfelge ihre Form nicht ändert und dabei auch nicht zur Schlackenbildung oder Oberflächenkorrosion kommt, wird sie vorzugsweise aus einem rostfreien ferritischen Stahl oder einer Titan- bzw. Nickellegierung gefertigt. Die zentrale Ventileinheit oder die Rohrleitungen können auch aus glasfaserverstärkten hitzebeständigen Kunststoffen oder aus keramischen Werkstoffen oder aus biegsamen rohrförmigen Kettengliedern bestehen.

Eine weitere vorteilhafte Ausgestaltung der Erfindung sieht eine in die zentrale Felgennabe axial einsteckbare bzw. einschraubbare Ventileinheit mit oder ohne Abdeckung vor, die das handelsübliche Ventil mittels einer in der Regel zentralen Aufnahmebohrung beinhaltet, wobei die Abdeckung abschließbar und von der Außenseite für die Aufnahme des Felgen- bzw. Fahrzeugherstellersymbols und/oder einer Reifendruckanzeige dienen kann. Zwecks manuellen Befüllens des Reifens wird die Abdeckung durch Zug, Druck, Biegung oder Torsion bzw. mittels eines Schlüssels geöffnet. Die Verwendung einer derartigen separaten Ventileinheit ermöglicht wesentlich größere Gestaltungsfreiheit bezüglich der Anzahl, Form und Lage der Felgenspeichen und bezüglich der Mündung der Druckmittelzuführungskanäle in die Felgennabe und in die zentrale Ventileinheit.

Eine Weiterentwicklung der in der Felgennabe platzierten Ventileinheit sieht den Einbau eines Reifendruckmeßsystems in der Felgennabe neben oder koaxial um das zentrale Ventil vor. Vorzugsweise werden das Reifendruckmeß- und Anzeigesystem sowie das Ventil zusammen vorerst in die Ventileinheit integriert und danach komplett als eine Einheit in die Felgennabe eingesetzt. Dabei dient der Deckel der Ventileinheit vorzugsweise als Anzeigeinstrument für den Reifendruck. Er lässt sich leicht öffnen, wie ein gelenkiges Display zum Auge hin drehen und ist vorzugsweise durch ringförmige federnde Elemente auf seiner Innenseite über eine ringförmige Nut um das Ventil abschließbar.

Da sich das Druckmeßsystem in der Nähe des Ventils befindet und sich hier Luftkanäle befinden, die mit dem Reifeninneren verbunden sind, lässt sich den Reifendruck durch bekannte Meßsysteme wie z.B. Piezo-Effekt, Dehnungsmessstreifen, einfache Feder oder Gummimembranen und dgl. bekannten Elementen und physikalischen Effekten rein mechanisch ohne Fremdenergie, elektromechanisch oder rein elektronisch zur Anzeige bringen oder per Ultraschall oder elektromagnetische Wellen zum Bordcomputer des Fahrzeuges weiterleiten. Die direkte Anzeige an der Felge wird vorzugsweise im doppelwandigen Deckel bzw. hinter dem Deckel der Ventileinheit untergebracht, der entweder bei der Herstellung der Ventileinheit aus Kunststoffen in Form von Filmgelenk an diese mit angespritzt wird oder separat gefertigt und an die Ventileinheit durch bekannte Prinzipien wie Zylinder oder Kugel und Pfanne befestigt wird. Die Abdeckung der Felgennabe wird vorzugsweise aus einem durchsichtigen Material wie Glas, Plexiglas oder Makrolon hergestellt und dient als Sichtfenster für analoge oder digitale Anzeige bzw. als Display für den vorhandenen Druck im Reifeninneren. Die Form der Anzeige innerhalb des doppelwandigen Deckels kann radial, säulenförmig oder kreisrunde und koaxiale Flächen sein, die ihre Farben druckabhängig ändern. Im Display können auch Texte erscheinen, die den Zustand des Reifens und des Reifendrucks beschreiben und Hinweise zur Sicherheit, wie z.B. das Datum der Reifenmontage, geben.

Das Druckmedium gelangt entweder von außen oder von der Fahrzeugseite über das in der zentralen Ventileinheit axial angeordnete Ventil und von dort radial unmittelbar oder mittels einer austauschbaren Ventileinheit, die in der Felgennabe abgedichtet platziert ist, über radiale Kanäle oder Schläuche bzw. Leitungen der Felge und der Felgenspeichen zum Felgenbett in den Reifen.

Eine derart konzipierte Felge kann sowohl für einfache manuelle Bedienung der Luftdruckkontrolle als auch für ein vollautomatisches Reifendruckregelsystem durch das Fahrzeug selbst wie auch für eine vollautomatische Befüllung des Reifens durch die Erstausrüster eingesetzt werden. Die Felge bleibt für beide Anwendungsfälle jeweils die gleiche. Die zentrale Ventileinheit wird jedoch von der einen oder von der anderen Seite in die Felgennabe eingesetzt oder sie wird von vornherein für beide Anwendungen vorgesehen. Die sichtbare Außenseite der Felgennabe wird mit einer vorzugsweise abschließbaren Abdeckung abgeschlossen, die auch die Radschrauben oder Mutter mit abdecken kann. Dadurch wird keine anschraubbare Kappe für das eigentliche Ventil benötigt. Somit kann der Nippel um das Ventil als Dorn für eine Druckluftkupplung und gleichzeitig auch zur Befestigung des Deckels verwendet werden. Bei der Verwendung einer austauschbaren zentralen Ventileinheit, die nach Fertigung der Felgennabe in die Felgennabe eingesetzt wird, weist die Ventilnadel für manuelle Bedienung nach außen hin und für automatische Bedienung durch das Fahrzeug selbst zur Fahrzeugachse bzw. zur Antriebswelle hin.

Das zentrale Ventil zeigt mit seinem Nadelkopf für manuellen Betrieb in die vom Fahrzeug abgewandte Richtung hin. Bei dieser Ventilanordnung wird der freie Raum um das Ventil zweckmäßigerweise für den Schlüsselansatz zum Befestigen bzw. zum Lösen und Austauschen der Ventileinheit an der Felgennabe ringförmig hohl und am Umfang sechseckig, vieleckig, zykloidenförmig oder wie eine Innen-Stern, Innenvielzahn- bzw. Innentorxschraube gestaltet.

Eine Weitergestaltung der Erfindung sieht vor, dass für manuelle, halb- bis vollautomatische Bedienung mit einem Druckluftschlauch oder mit einer Druckluftpistole sich am zylindrischen Umfang des Ventilnippels und/oder an der Außenmantelfläche des ringförmigen Hohlraums um den Ventilnippel mit oder ohne Schlüsselansatz eine ringförmige Umfangsnut befindet, die als ein Kupplungsteil, Nippel oder Dose zum Einrasten einer mechanischen oder elektromechanischen Kupplung für Druckluftzufuhr gestaltet ist, dessen zweiter Kupplungsteil, Dose oder Nippel, sich am Druckluftschlauch bzw. an der Druckluftpistole befindet. Diese Umfangsnuten werden vorzugsweise auch zum Arretieren des Ventildeckels verwendet.

Für ein vollautomatisches Druckluftregelsystem durch das Fahrzeug selbst befindet sich an der Stirnseite des zur Radachse bzw. zur Antriebswelle hin gerichteten Ventilnippels koaxial um das Ventil eine axiale Nut oder am zylindrischen Umfang des Ventilnippels eine Umfangsnut, in der sich eine mit der Radachse korrespondierende dynamische Axial- oder Radialdichtung bzw. mit der Antriebswelle korrespondierende statische Axial- oder Radialdichtung befindet. Bei dieser Anordnung stellt die Radachse bzw. die Antriebs- und Gelenkwelle den zweiten Kupplungsteil der Druckluftzufuhreinheit dar, der auch alternativ zur Ventileinheit die Nut und die Dichtung der Kupplungseinheit beinhalten kann.

Ein derart konzipiertes und in der Felgennabe zentral und axial platziertes Ventil mit einem daran integrierten Kupplungselement ermöglicht das Befüllen und Kontrollieren von Reifendruck sowohl manuell als auch automatisch wie auch durch das Fahrzeug selbst.

Manuell kann die Druckluftpistole bzw. der Druckluftschlauch mit einem derartigen Kupplungselement, Dose oder Nippel, auf das Kupplungselement des Ventils in der Felgennabe, Nippel oder Dose, aufgesetzt bzw. in diese hinein gesteckt und los gelassen werden. Die in der Ventileinheit der Felge und im Kopf der Druckluftpistole integrierten Kupplungsteile halten die Druckluftverbindung zur Felge solange selbsttätig fest, bis der an der Druckluftpistole oder am Felgenventil eingestellte Reifendruck erreicht wird. Sobald der eingestellte Reifendruck erreicht ist, löst die Kupplung selbsttätig aus und entkoppelt somit die Druckluftverbindung zum Felgenventil. Eine zusätzliche Energiequelle ist nicht erforderlich, da Druckluft selbst Energie beinhaltet und Arbeit leisten kann.

Ein Ring oder Stift, der in der zentralen Ventileinheit koaxial um das Ventil platziert und durch eine elastische Membrane oder Federkräfte axial beweglich angeordnet ist, vollführt beim Befüllen des Reifens relativ zur Ventileinheit eine axiale Bewegung. Die Position dieses Ringes oder Stiftes ist ein Maß für den Reifendruck. Dieser Ring oder Stift ragt während des Befüllens des Reifens mit zunehmendem Druck immer mehr heraus und drückt gegen die Kupplungsdose, die sich beim Befüllen des Reifens um das Ventil befindet. Beim Erreichen des erforderlichen Reifendrucks löst er die Arretierung der Kupplungsdose selbsttätig aus. Die Auslösekraft dieses Ringes bzw. des Stiftes wird über seine Projektionsfläche in Abhängigkeit des Reifendrucks vorab d.h. bei der Paarung und Montage des Reifens mit der Felge durch den Hersteller ermittelt und z.B. von der Rückseite der Ventileinheit eingestellt oder gleich die passende Ventileinheit in die Felgennabe montiert.

Bei Fahrzeugen mit automatischem Reifendruckregelsystem sind das zentral angeordnete Ventil und das Kupplungselement, die Nut für die Dichtung, zur Fahrzeugseite zugewandt. Am Ende der feststehenden Radachse der nicht angetriebenen Räder sowie am Ende der rotierenden Antriebs- oder Gelenkwelle der angetriebenen Räder mit oder ohne Lenkung befindet sich ebenfalls ein mit Rückstellfeder behaftetes handelsübliches Druckluftventil, koaxial umgeben von einem Kupplungselement in Form einer Dichtungsfläche oder Dichtungsnut, das mit dem Kupplungselement der Felgennabe korrespondiert. Das Ventil der Radachse und der Antriebs- oder Gelenkwelle wird durch eine zentrale Bohrung in der neutralen Zone auf der Rotationsachse der Achse und der Welle fahrzeugseitig mit Druckmedium versorgt.

Im nicht montierten Zustand der Räder sind alle Ventile, die der Felgen und die der Radachsen und Antriebs- bzw. Gelenkwellen, geschlossen. Nach der Montage der erfindungsgemäßen Felge drückt sich die Ventilnadel der Felge gegen die Ventilnadel der Radachse und der Antriebs- oder Gelenkwelle. Die Ventilfedern heben gegenseitig ihre Sperrwirkung auf und beide Ventile öffnen sich. Damit ist der Reifen, auch während der Fahrt, mit dem automatischen Reifendruckregelsystem des Fahrzeuges verbunden. Die statische oder dynamisch rotierende Dichtung der koaxialen Kupplung um die beiden Ventile der Radnabe und der Antriebswelle bzw. der Radachse sorgen auf dem kleinsten Radius dafür, dass keine Luft vom System entweicht.

Bei dem System der nicht angetriebenen Räder erfolgt die Abdichtung zwischen der feststehenden Radachse und der sich drehenden Radnabe durch die Verwendung einer Luftdichten Lagerung. In diesem Falle wird zusätzlich zwischen der Felge und der Radnabe mit einer statischen Dichtung wie ein O-Ring auf der Radnabe oder alternativ in der Felgennabe abgedichtet.

Bei einer vorteilhafteren Lösung der Abdichtung der nicht angetriebenen Räder sorgt ein dynamischer Axialdichtring, U-förmig wie ein Reifen oder quadringförmig, der in zwei sich gegenüber liegenden stirnseitigen Axialnuten bezüglich der beiden Ventile der Felge und der feststehenden Radachse koaxial angeordnet ist, dafür, dass das Druckmedium vom Ventil der Radachse in das Ventil der Ventileinheit inmitten der Felgennabe gelangt, ohne durch die Felgen- oder Radnabe zu entweichen. Das Ende der Radachse kann ebenfalls rohrförmig in die Felge oder in die Ventileinheit inmitten der Felgennabe hinein ragen und gegen diese durch ein Radialdichtring bzw. Wellendichtring abdichten. Je kleiner der Durchmesser dieser Dichtung, desto geringer ist die Umfangsgeschwindigkeit und der damit verbundene Abrieb sowie das Reibungsmoment der abdichtenden Dichtlippen. Dieses System stellt eine dynamische Kupplung zwischen der zentralen Ventileinheit in der Felgennabe und der fahrzeugseitigen Radachse und Antriebs- oder Gelenkwelle dar. Die dynamische Dichtung liegt vorzugsweise lose, d.h. fliegend in ihrer Nut, damit sich der Abrieb auf beidseitigen Dichtlippen verteilt. Dadurch verdoppelt sich die Lebensdauer der Dichtung. Sie kann auch einseitig in einer Nut sitzen und mit einer Dichtlippe axial gegen eine Stirnfläche der Ventileinheit oder der Radachse abdichten.

Bei dem System der angetriebenen Räder mit oder ohne Lenkung sorgt eine selbst sichernde und abdichtende Radmutter dafür, dass zwischen der Antriebswelle oder Gelenkwelle und der Radnabe kein Druckmedium entweicht. Zwischen der Felge und der Radnabe wird in diesem Fall mit einer statischen Dichtung wie ein O-Ring auf einem Absatz der Felgennabe oder alternativ auf der Radnabe abgedichtet.

Bei einer vorteilhafteren Lösung dieses Abdichtungsproblems ragt ein Absatz der Antriebs- oder der Gelenkwelle in eine ringförmige Senkung der Felge oder der zentralen Ventileinheit der Felge hinein und dichtet dort mit Hilfe einer statischen Dichtung radial und in Bezug auf das Felgenventil koaxial ab. Die dynamische Abdichtung zwischen der Antriebs- bzw. Gelenkwelle und dem Fahrzeug befindet sich in diesem Falle am fahrzeugseitigen Ende der Antriebs- oder Gelenkwelle d.h. auf der Seite des mit Faltenbalg abgekapselten homokinetischen Gelenkes. Zwischen der zentralen Ventileinheit in der Felgennabe und der Antriebs- bzw. Gelenkwelle kann die statische Abdichtung ebenfalls stirnseitig axial erfolgen.

Im Einzelnen zeigen:

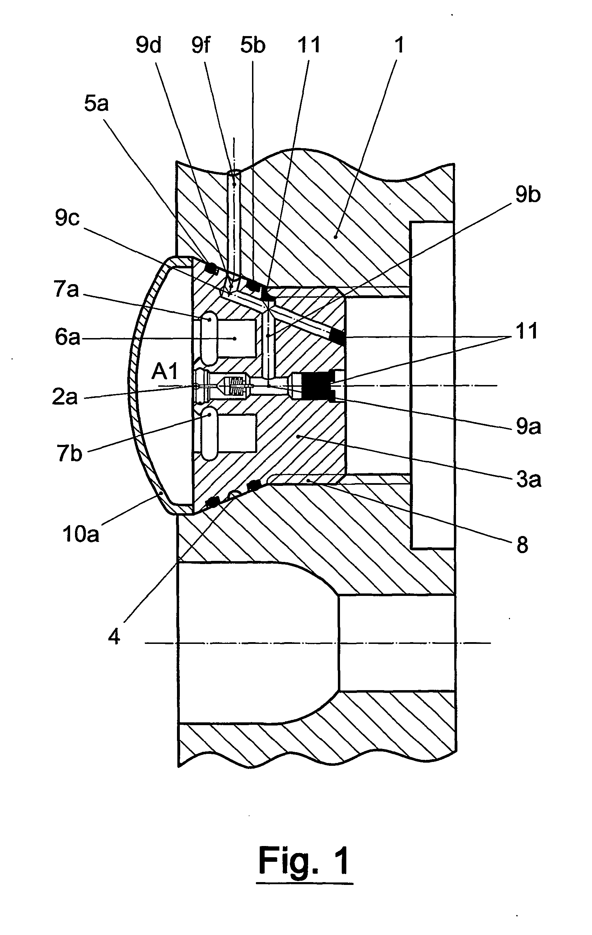

- Fig. 1: den Querschnitt durch die erfindungsgemäße Felgennabe mit einer zent- ralen, von außen eingesetzten Ventileinheit für manuelles Befüllen des Reifens, in deren Mitte das Felgenventil axial und koaxial um das Ventil ein Kupplungselement platziert ist.

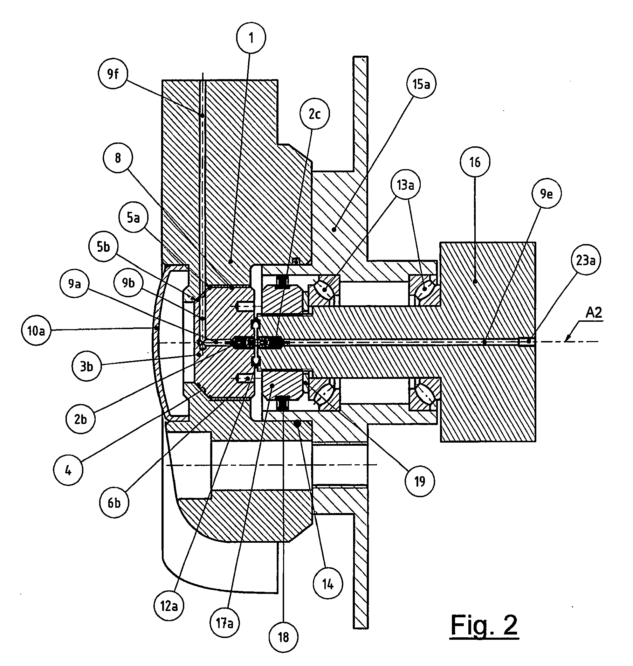

- Fig. 2: den Querschnitt durch die erfindungsgemäße Felgennabe mit einer zent- ral angeordneten und zum Fahrzeug zugewandten Ventileinheit für au- tomatisches Befüllen des Reifens durch die feststehende Achse eines nicht angetriebenen Rades. Koaxial um beide Ventile befindet sich eine dynamische Axialdichtung als Kupplung zwischen den beiden sich relativ zu einander drehenden Teilen.

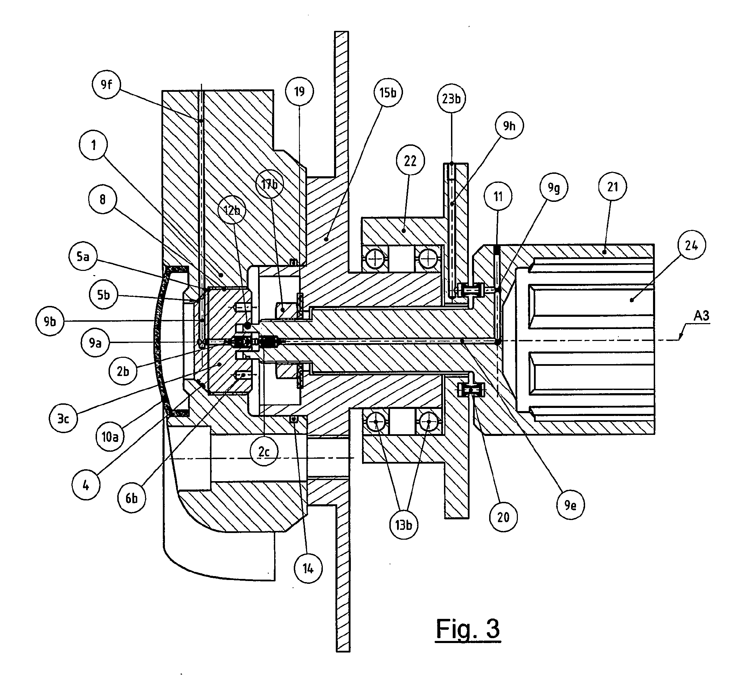

- Fig. 3: den Querschnitt durch die Nabe der erfindungsgemäßen Felge mit einer zentral angeordneten und zum Fahrzeug zugewandten Ventileinheit für automatisches Befüllen des Reifens durch die rotierende Antriebs- oder Gelenkwelle eines angetriebenen und gelenkten Rades. Koaxial um die Ventile befindet sich eine Kupplung mit einer statischen Dichtung.

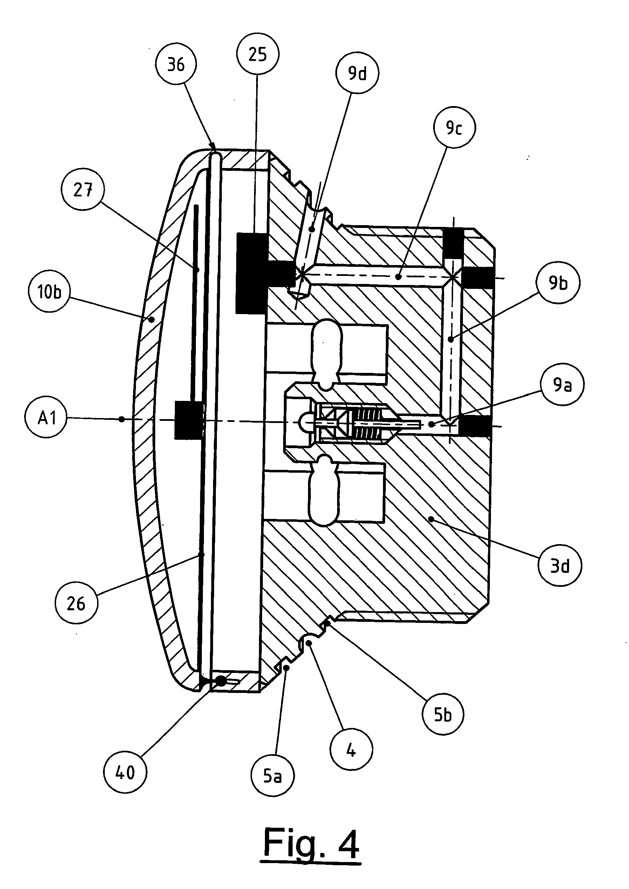

- Fig. 4: den Querschnitt durch eine zentrale Ventileinheit mit einem Drucksensor und einem Manometer im Deckel der Ventileinheit.

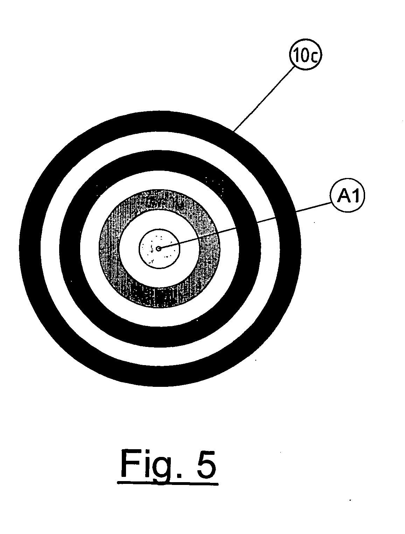

- Fig. 5: die Vorderansicht auf die Abdeckung der Ventileinheit, die als Display für die Anzeige des Reifendrucks in Form von Kreisen ausgebildet ist.

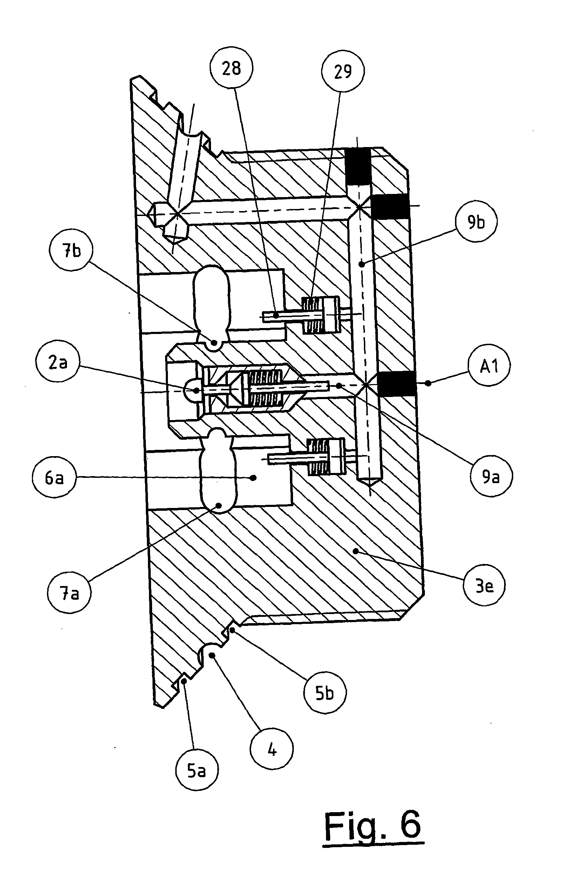

- Fig. 6: den Querschnitt durch eine Ventileinheit mit Druckluftnippel und/oder Druckluftdose und einem automatischen Auslösemechanismus.

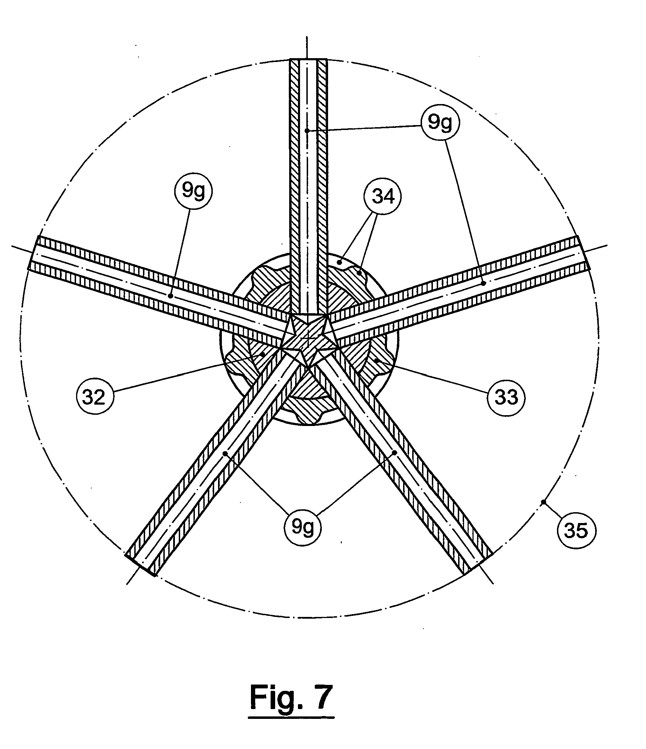

- Fig. 7: einen Schnitt senkrecht zur Rotationsachse einer fünfteiligen Rohranord- nung, wie diese zur Erzeugung von fünf Bohrungen in den Speichen ei- ner Felge mit einsetz- und austauschbarer Ventileinheit vorgefertigt in die Gußform der Leichtmetallfelge eingelegt und umspritzt wird. Ein äußerer Ring hält die Rohre zusammen und wird mit in die Felgennabe eingegos- sen. Ein zylindrischer Kern schert beim Ausschlagen die überstehenden Rohrenden nach dem Gießvorgang gegenüber dem äußeren Ring ab.

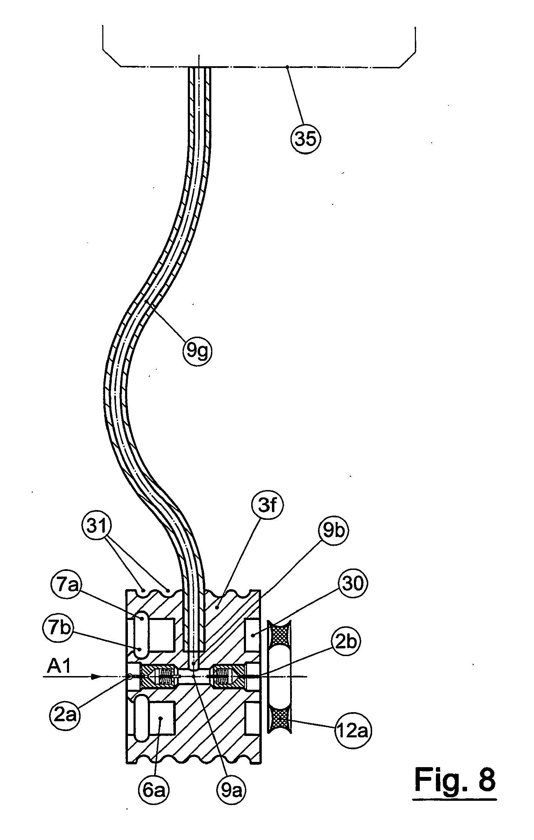

- Fig. 8: den Querschnitt durch die Rotationsachse einer in die Felgennabe fest eingegossene zentrale Ventileinheit mit den daran fest verbundenen Luft- kanalrohren für einseitige oder beidseitige Bedienung, manuell bzw. halbautomatisch von außen oder vollautomatisch durch das Fahrzeug selbst durch die Radachse bzw. durch die Antriebs- oder Gelenkwelle.

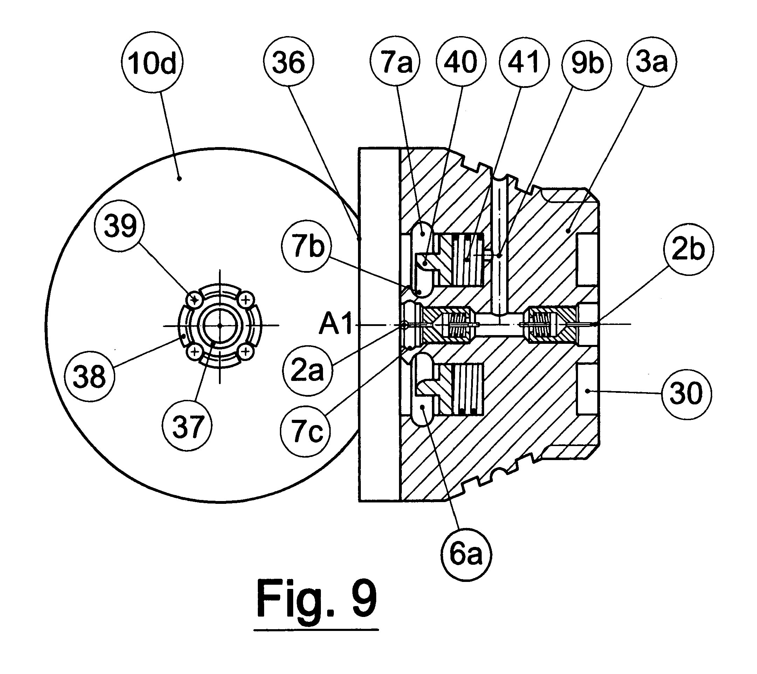

- Fig. 9: die zentrale Ventileinheit, die mit ihrer Abdeckung in Form eines Filmge- lenkes aus einem Stück aus Kunststoff gefertigt ist. Auf der Rückseite der Abdeckung befindet sich gegenüber dem Ventil ein geschlitzter Ring, der beim Schließen des Deckels federnd in die Umfangsnut des Nippels um das Ventil greift und die Abdeckung geschlossen hält.

Identische Teile haben die gleiche Ziffer oder den gleichen Buchstaben. Unterschiedliche Indizes kennzeichnen verschiedene Bereiche oder unterschiedliche Ausführungen oder mehrfache Anordnung desselben Elementes.

Gemäß Fig. 1 ist auf der Rotationsachse (A₁) in der Nabe einer Felge (1) ein Ventil (2a) zentral und mit dem Kopf dem Fahrzeug abgewandten Seite austauschbar an einer zentralen Ventileinheit (3a) befestigt. Die Ventileinheit (3a) weist am Umfang eine Nut (4) für Druckluftzu- und -abfuhr in die Felge (1) und beidseitig um die Nut (4) zwei weitere Dichtungsnuten (5a, 5b) auf, in denen sich jeweils eine statische Dichtung wie. z.B. ein O-Ring befindet. Das vorzugsweise handelsübliche Felgenventil (2a) ist durch Längs- und Querbohrungen (9a, 9b, 9c, 9d) der Ventileinheit (3a) mit der Umfangsnut (4) verbunden, die auch in der Felgennabe ausgeführt sein kann. Die Ventileinheit (3a) besitzt in ihrer Mitte um das Ventil (2a) einen Schlüsselansatz (6a), der als Innensechskant, Innenvielzahn, Torxschraube und dgl. gestaltet ist und am Umfang eine Nut (7a) als eine Kupplungsdose zum Ankoppeln einer Druckluftkupplung beispielsweise wie üblich mittels Kugeln und Federn aufweist. Alternativ kann die Außenseite des Ventils (2a) als Kupplungsnippel (7b) einer Druckluftkupplung gestaltet werden. Derartige Kupplungen für Druckluftanschlüsse gehören zum Stand der Technik und brauchen daher hier nicht weiter erklärt zu werden.

Die Ventileinheit (3a) wird von außen oder vor der Fahrzeugseite in die Felgennabe (1) eingesetzt und durch Befestigungselemente wie z.B. ein selbst sicherndes Feingewinde (8) und einen Konus oder Absatz als Anschlag gesichert.

Innerhalb der Felge (1) befindet sich in mindestens einer Felgenspeiche eine radiale Bohrung (9f), die beim Gießen bzw. Spritzen einer Leichtmetallfelge vorab als Rohr in die Form eingelegt wird. Damit dieses Rohr, das einen höheren Schmelzpunkt hat als die Legierung der Leichtmetallfelge, bei der Rotation der Felge keinen Umwucht erzeugt, wird es in seinen Innen- und Außendurchmesser so bemessen, dass es das gleiche Volumengewicht bekommt wie die Leichtmetalllegierung der Felge. Das Medium, Luft oder andere Gase, mit dem der Reifen befüllt wird, gelangt über das Ventil (2a) durch die Bohrungen (9a, 9b, 9c, 9d) und Umfangsnut (4) der Ventileinheit (3a) in die Bohrung bzw. Bohrungen (9f) der Felge bzw. der Felgenspeichen und von dort in den Reifen, der nicht dargestellt ist. Um in jedem Falle Unwucht zu vermeiden und die Befüllungsdauer des Reifens zu verkürzen, werden je nach Anzahl der Felgenspeichen in mehreren Speichen Rohrleitungen (9f) gelegt, die alle über die gleiche Umfangsnut (4) am Umfang der Felgennabe oder am Umfang der Ventileinheit, vorzugsweise in einem konischen Bereich, mit Druckluft versorgt werden. Innerhalb der Ventileinheit existieren ebenfalls mehrere radiale Kanäle (9b, 9c, 9d), die das Druckmedium vom Ventil (2a) zur Umfangsnut (4) führen. Die Luftzu- und Abfuhr kann auch wie bei Stahlfelgen außerhalb der Felgenspeiche über einen Schlauch oder festes Rohr erfolgen. Sowohl das Felgenventil (2a) als auch die Ventileinheit (3a) sind jeweils separat austauschbar.

Die Abdeckung (10a) verdeckt die Ventileinheit (3a) und trägt vorzugsweise das Symbol des Herstellers. Sie kann als ein separates Teil in die Felgennabe (1) eingesteckt werden. Sie kann aber auch mit einem Filmgelenk aus Kunststoff an der Ventileinheit (3a) angespritzt werden und sich durch Ziehen, Drücken oder Drehen oder mit einem Schlüssel öffnen lassen.

Die Stopfen (11) dichten die Bohrungsöffnungen der Druckluftkanäle (9a, 9b, 9c) ab, die Fertigungstechnisch bedingt sind.

Selbstverständlich kann das Felgenventil direkt und unmittelbar in eine Bohrung der Felgennabe axial befestigt werden. Dies würde jedoch nicht die zahlreichen Vorteile einer Ventileinheit (3a) mit sich bringen.

Gemäß Fig. 2 ist eine erfindungsgemäße Felge (1) an der Radnabe (15a) einer nicht angetriebenen Radaufhängung bzw. Radachse (16) angeschraubt. Die Radnabe (15a) ist mittels Wälzlager (13a) auf der Radachse (16) gelagert und mit Hilfe der selbst sichernden Mutter (17a) gesichert. Im äußeren Teil der Felgennabe (1) befindet sich die Ventileinheit (3b) mit dem zum Fahrzeug zugewandten Felgenventil (2b).

Die Ventileinheit (3b) mit der Umfangsnut (4) und Dichtungen (5a, 5b) ist mittels Schlüsselansatzes (6b) und eines selbst sichernden Feingewindes (8) an die Felgennabe abdichtend, vorzugsweise durch eine konische Senkung in der Felgennabe, befestigt. Die Ventileinheit (3b) kann, wie in Fig. 1 dargestellt, von Außen in die Felgennabe eingesetzt werden. Sie wird jedoch vorzugsweise, wie hier dargestellt, von der Fahrzeugseite in die Felgennabe eingesetzt. Letzteres ermöglicht einen Kräfteausgleich an der Ventileinheit (3b), verursacht durch das Druckmedium an der Ventilseite einerseits und an der konischen Umfangsnut (4), der sich bei entsprechender Bemessung der Projektionsflächen optimal einstellen lässt, andererseits.

Die Achse (A₂) der Radachse bzw. der Fahrzeugaufhängung (16) ist in ihrer neutralen Zone durchbohrt. Das Druckmedium, Luft oder andere Gase, gelangt vom Fahrzeug durch elastische Schläuche über den Anschluß (23a) und durch die zentrale Bohrung (9e) der Radachse (16) zum Achsventil (2c), das am Ende der Radachse (16) austauschbar befestigt ist. Von dort gelangt das Druckmedium über das Felgenventil (2b), Bohrungen (9a, 9b) sowie Umfangsnut (4) der zentralen Ventileinheit (3b) in die Felgenbohrung (9f) und von dort in den Reifen, der nicht dargestellt ist.

Bei nicht montierten Rädern hält das Felgenventil (2b) in der Ventileinheit (3b) das Druckmedium im Reifen-Felgen-System dicht. Auf der Fahrzeugseite hält das Achsventil (2c) das Druckmedium des Fahrzeugsystems dicht, so dass von keinem System das Druckmedium entweichen kann. Nach dem Aufsetzen der Felgennabe (1) mit der zentralen Ventileinheit (3b) auf die Radnabe (15a) drückt sich der Nadelkopf des Felgenventils (2b) gegen den Nadelkopf des Achsventils (2c), so dass beide Ventile geöffnet werden. Dadurch wird die Reifenluft mit dem automatischen Reifendruckregelsystem des Fahrzeugs verbunden.

Ein luftdicht abgedichtetes Wälzlager (13a) oder eine selbst sichernde und abdichtende Radmutter (17a) mit einem an deren Umfang integrierten dynamischen Radialdichtring (18) sorgt dafür, dass das Druckmedium zwischen der Radachse (16), und der Radnabe (15a) nicht entweicht. Der Luftspalt zwischen der Radnabe (15a) und der Felgennabe (1) wird durch eine statische Dichtung wie zum Beispiel durch einen O-Ring (14) in der Felgennabe (1) oder auf der Radnabe (15a) abgedichtet.

Eine vorteilhaftere Lösung dieses Abdichtungsproblems sieht an den sich gegenüber liegenden Stirnseiten der Radachse (16) und der zentralen Ventileinheit (3b) je eine in Bezug auf die Rotationsachse (A₂) koaxiale Axialnut als Kupplungselement vor, in denen sich eine U-förmige dynamische Dichtung (12a), vorzugsweise fliegend platziert ist, deren Öffnung zum Druckmedium d.h. zur Rotationsachse (A₂) gerichtet ist. Bei einer derartigen Abdichtung der beiden sich gegeneinander rotierenden Teile (3b, 16) entfallen die anderweitigen Abdichtungen der Felgennabe (1) gegenüber der Radnabe (15a) und der Radnabe (15a) gegenüber der Radachse (16). Weiterhin lässt sich diese dynamische und somit dem Abrieb unterworfene Dichtung (12a) bei jedem Radwechsel, d.h. mindestens zweimal im Jahr, wechseln bzw. austauschen.

Wird ein derart konzipiertes Rad mit erfindungsgemäßer Felge (1) vom Fahrzeug entfernt, so schließen beide Rückschlagventile (2b, 2c), an der Ventileinheit (3b) der Felgennabe und an der Radachse (16), sofort und beide Systeme bleiben dicht. Vorzugsweise sind die Nadelköpfe der beiden zusammenwirkenden Ventile (2b, 2c) derart gestaltet, dass sie sich gegenseitig seitlichen Halt gewähren. Dies kann beispielsweise durch kugel- und pfannenförmige Gestaltung der zusammenwirkenden Ventilnadelköpfe, konvex und konkav, erfolgen oder sie bilden zwei spitze Innen- und Außenkegel, die aus gehärteten Werkstoffen bestehen, um geringe Reibung und einen sehr geringen Verschleiß aufzuweisen.

Gemäß Fig. 3 ist eine erfindungsgemäße Felge (1) auf der Radnabe (15b) einer angetriebenen Antriebswelle (21) oder einer gelenkten und angetriebenen Gelenkwelle (24) befestigt. Im vorderen Teil der Felgennabe (1) befindet sich die zentrale Ventileinheit (3c) mit dem zum Fahrzeug hin zugewandten Felgenventil (2b).

Die Ventileinheit (3b) mit der Umfangsnut (4) und den Dichtungen (5a, 5b) ist mittels Schlüsselansatzes (6b) und eines selbst sichernden Feingewindes (8) an die Felgennabe abdichtend, vorzugsweise durch eine Senkung oder einen Absatz in der Felgennabe (1), befestigt.

Die Rotationsachse (A₃) der Antriebs- oder Gelenkwelle (21, 24) ist in ihrer neutralen Zone axial durchbohrt (9e). Das Druckmedium gelangt fahrzeugseitig durch elastische Schläuche über den Anschluß (23b) an der feststehen oder gelenkigen Radaufhängung und Lagergehäuse (22), an der auch der nicht dargestellter Bremssattel befestigt ist, durch die Bohrung (9h) in der Radaufhängung (22) zur dynamischen Axialdichtung (20). Von dort gelangt das Druckmedium durch die stirnseitige Axialnut und Bohrungen (9g, 9e) der Antriebs- oder Gelenkwelle (21, 24) zum handelsüblichen Achsventil (2c), das an der Antriebs- oder Gelenkwelle (21, 24) austauschbar befestigt ist. Von dort gelangt das Druckmedium über das Felgenventil (2b) durch Bohrungen (9a, 9b) sowie Umfangsnut (4) der Ventileinheit (3b) in die Felgenbohrung (9f) und von dort in den Reifen, der nicht dargestellt ist. Der Stopfen (11) verschließt die offene Bohrung (9g), die Fertigungstechnisch bedingt ist.

Die Felge (1) ist auf der Radnabe (15b) angeschraubt. Die Antriebs- oder Gelenkwelle (21, 24) steckt in der Radnabe (15b), an der auch die Bremsscheibe befestigt ist. Die Antriebs- oder Gelenkwelle (21, 24) überträgt mit Hilfe einer Verzahnung das Drehmoment formschlüssig auf die Radnabe (15b), die ihrerseits mittels Wälzlager (13b) in der Radaufhängung (22) drehbeweglich gelagert ist. Eine Dichtscheibe (19) hinter der Radmutter (17b) oder die Radmutter (17b) selbst mit einer in ihr integrierten statischen Dichtung sorgen dafür, dass das Druckmedium durch die Keilwellenverzahnung zwischen der Antriebs- oder Gelenkwelle (21, 24) und der Radnabe (15b) nicht entweicht. Der Luftspalt zwischen der Radnabe (15b) und der Felge (1) wird durch eine statische Dichtung wie zum Beispiel durch einen O-Ring (14) in der Felgennabe (1) oder auf der Radnabe (15b) abgedichtet.

Bei einer vorteilhafteren Lösung dieses Abdichtungsproblems ragt ein Absatz der Antriebs- oder Gelenkwelle (21, 24) ringförmig und koaxial in eine ringförmige Senkung der Ventileinheit (3b) der Felge (1) hinein und dichtet dort mit Hilfe einer statischen Dichtung (12b) als eine statische Kupplung radial oder axial ab. Selbstverständlich kann die statisch abdichtende Dichtung (12b) in einer Umfangsnut auf dem Ventilsitz (2b) der Ventileinheit (3c) sitzen und die mit ihr korrespondierende Senkung in der Antriebs- oder Gelenkwelle (21, 24) ausgebildet werden.

Die dynamische Abdichtung (20) zwischen der Antriebs- oder Gelenkwelle (21, 24) und der Radaufhängung (22) befindet sich in diesem Falle zwischen der Radaufhängung (22) und der Antriebs- oder Gelenkwelle (21, 24) auf der Seite des mit Faltenbalg abgekapselten homokinetischen Gelenkes (24). Diese lässt sich durch das Abschrauben der Radmutter (17b) austauschen, ohne die Radlagerung anzutasten.

Wegen der Austauschbarkeit der Räder zwischen einer angetriebenen und einer nicht angetriebenen Radnabe werden zweckmäßigerweise beide beschriebenen Kupplungsvarianten, zwischen der rotierenden Ventileinheit (3b, 3c) und der feststehenden Radachse (16) d.h. dynamisch auf der einen Seite sowie zwischen der rotierenden Ventileinheit (3b, 3c) und der rotierenden Antriebs- oder Gelenkwelle (21, 24) d.h. statisch auf der anderen Seite, einheitlich ausgeführt werden, d.h. entweder beide gemäß Figur 2 axial oder beide gemäß Figur 3 radial.

Gemäß Fig. 4 besitzt die zentrale Ventileinheit (3d) in einem seiner Bohrungskanälen (9a, 9b, 9c, 9d) einen Drucksensor (25), der den Reifendruck entweder passiv d.h. mechanisch ohne Fremdenergie oder elektromechanisch oder elektronisch an das Manometer (27) weiterleitet, das hinter der durchsichtigen Abdeckung (10b) angeordnet ist. Der Sensor (25) kann auch den Reifendruck aktiv durch schwache elektromagnetische Wellen, infrarot, Bluetooth, Ultraschall und dgl. drahtlose Übertragungsverfahren an den Bordcomputer des Fahrzeuges senden bzw. durch diesen sich passiv abfragen lassen. Hinter dem Manometer (27) befindet sich im Raum (26) die erforderliche Elektronik und Energiequelle wie z.B. eine Batteriezelle. Diese können auch in der zentralen Ventileinheit (3d) untergebracht werden. Im Sichtfenster der Abdeckung (10b) können auch Kammer mit farbigen Flüssigkeiten als Display vorhanden sein, deren Farbe sich in Abhängigkeit vom Reifendruck ändert und somit eine farbige Anzeige für den vorhandenen Reifendruck darstellt, die von außen ohne sich beugen zu müssen gut ablesbar ist.

Die Abdeckung (10b) ist durch ein Filmgelenk (36) mit der Ventileinheit (3d) befestigt. Auch ihr Verschlussmechanismus (40) ist Bestandteil der Ventileinheit, so dass sie gemeinsam eine Einheit bilden und zusammen in einer Form gespritzt werden können.

Gemäß Fig. 5 ist die Abdeckung (10c) der zentralen Ventileinheit (3a, 3b, 3c, 3d) als Display ausgebildet, auf dem der Druckzustand in Form von farbigen Kreisen oder als Kreisen mit unterschiedlichen Dicken und Grautönen dargestellt ist.

Gemäß Fig. 6 befinden sich im ringförmigen Hohlraum (6a) koaxial um das Ventil (2a) Stifte oder ein Ring (28), der parallel zur Rotationsachse (A1) angeordnet ist und einerseits durch den Reifendruck im Kanal (9b) nach außen gedrückt und andererseits durch die Kraft der Feder (29) zurück gedrückt wird. Mit zunehmendem Reifendruck wandert der Ring (28) immer mehr gegen die Federkraft nach außen, so dass Markierungen auf dem Ring bzw. auf den Stiften ein mechanisches Manometer darstellt. Steckt man eine Druckluftkupplungsdose über den Kupplungsnippel um das Ventil (2a), so rastet diese durch die Nuten (7a) oder (7b) ein und befüllt den Reifen so lange bis der Reifendruck seinen Sollwert erreicht hat und die Stifte bzw. der Ring (28) die Kupplungsdose, nicht dargestellt, selbsttätig vom Ventilnippel entkoppelt.

Gemäß Fig. 7 ist mindestens eine Rohrleitung (9g) in eine radiale Bohrung eines Ringes (33) hineingesteckt, der zusammen mit der Rohrleitung (9g) in die Gußform der Leichtmetallfelge eingesetzt werden. Der Ring (33) hält zum einen in der Gußform die Rohrleitung bzw. alle vorhandenen Rohrleitungen (9g), hier fünf an der Zahl, in Position und zum anderen bildet er die vorgefertigte Nabe der Felge für die Aufnahme der zentralen Ventileinheit einerseits und für die Zentrierung auf der Radnabe andererseits. Der Ring (33) kann im Durchmesser so weit vergrößert werden, dass er die Befestigungsbohrungen bzw. Befestigungsschrauben der Felge in sich mit einschließt. In diesem Falle ist er an seinem äußeren Umfang zum Zwecke der Übertragung von Kräften und Momenten profiliert (34). Auch die Verbindung zwischen den Rohrleitungen (9g) und dem Ring (33) kann zum Zwecke der Kraftübertragung genutzt werden. Die Rohrleitungen (9g) können auch aus einem kurzzeitig hitzebeständigen Kunststoff oder aus formbaren metallischen oder keramischen und dergleichen biegsamen Kettengliedern zusammengesetzt werden.

Ein weiteres vorteilhafteres Fertigungsverfahren der Felgennabe mit ihren radialen Luftkanälen (9g) sieht innerhalb des Ringes (33) ein zylindrisches, häufig verwendbares Zentralstück (32) aus einem harten Werkstoff, wie z.B. aus gehärtetem Werkzeugstahl, vor, das an seinem Umfang so viele Radialbohrungen besitzt, wie Rohrleitungen (9g) vorhanden sind. Dieses Zentralstück (32) wird zuerst in den Ring (33) hineingesteckt, so dass die radialen Bohrungen der beiden Teile miteinander fluchten. Danach werden die Rohrleitungen (9g) in die radialen Bohrungen gesteckt. Das Zentralstück (32) dient hierbei mit seinen definierten Bohrungstiefen als radialen Anschlag für die Rohrleitungen (9g). Durch eine axiale Kraft, z.B. durch eine Feder, auf das Zentralstück (32) oder durch die enge Passung werden die Rohrleitungen (9g) gegen Herausrutschen und gegen Verdrehung fest gehalten. Diese Einheit, wie sie in Fig. 7 dargestellt ist, wird in die Gußform, vorzugsweise auf die untere negative Formhälfte eingelegt, die die Sichtfläche der Felge bildet. Während des Gießvorganges verhindert das Zentralstück (32), dass die Schmelze in die Rohrleitungen (9g) gelangen. Nach der Entnahme der gegossenen Felge aus der Form wird das Zentralstück (32) hinaus geschlagen. Dabei schert es alle überschüssigen Enden der Rohrleitungen (9g) und nimmt diese mit sich aus der Felgennabe heraus. Der Ring (33) bildet die fertige Felgennabe mit ihren radialen Luftkanälen (9g) bis in das Felgenbett (35). Somit braucht die Felgennabe keine nachträglich mechanische oder spanabhebende Bearbeitung. Bei Verwendung einer derart vorgefertigten Felgennabe, die die Bohrungen der Felgenbefestigung in sich beherberg, können bei der Lackierung der Felge alle Bohrungen mit einer einzigen Abdeckung vollautomatisch abgedeckt werde. Eine derart zweiteilig zusammengegossene Felge lässt jede Menge gestalterische Freiheit für Design und Farbkombinationen zu und bereichert die Felgentechnik. Somit ist es möglich, die Felgennabe mit dem Kern der Speichen mit oder ohne Sichtflächen in die Gußform zu legen und sie mit Leichtmetallen oder Kunststoffen zu umspritzen.

Gemäß Fig. 8 verbindet mindestens ein räumlich geformter Rohrleitungskanal (9g) radial das Felgenbett (35) mit der zentralen Ventileinheit (3f). Die Leitungen (9g) sind entsprechend der Form der Speichen vorgeformt und radial mit der zentralen Ventileinheit (3f) befestigt, vorzugsweise in die radialen Bohrungen (9b) der Ventileinheit eingesteckt. Die zentrale Ventileinheit (3f) besitzt auf ihrer Mittelachse (A₁) eine Bohrung, vorzugsweise eine durchgehende Bohrung (9a), die mit den radialen Bohrungen (9b) und Rohrleitungskanälen (9g) verbunden ist. Auf der Außenseite der Felge ist in die axialen Bohrung (9a) der Ventileinheit (3f) ein handelsübliches, mit Federkraft schließendes Druckluft-Rückschlagventil (2a) eingeschraubt. Um dieses Ventil (2a) befindet sich ein Nippel (7b), der als die Hälfte einer Druckluftkupplung gestaltet ist. Um den Nippel befindet sich eine Schlüsselansatz (6a) und eventuell alternativ zum Nippel eine Kupplungsdose einer Druckluftkupplung (7a).

Für Fahrzeuge mit manueller Bedienung wird die axiale Bohrung (9a) entweder von vorne herein als Sackloch ausgeführt oder als Durchgangsloch mit beidseitigem Ventilanschluß, wobei der fahrzeugseitige Ventilanschluß durch einen Blindstopfen zu geschraubt wird.

Für Fahrzeuge mit einem automatischen Reifendruckregelsystem wird das handelsübliche Druckluft-Rückschlagventil (2b) am fahrzeugseitigen Ende der axialen Bohrung (9a) der Ventileinheit (3f) platziert. In diesem Falle kann die axiale Bohrung (9a) zur Außenseite als Sackloch ausgeführt werden oder der vorhandene Anschluß wird mit Hilfe eines Blindstopfens geschlossen. Es können auch beide Ventile (2a, 2b), wie abgebildet, gleichzeitig vorhanden sein, um neben einer automatischen Kontrolle durch das Fahrzeug selbst, auch einen manuellen Zugriff auf das System zu ermöglichen.

Um das Ventil (2b) befindet sich auf der Stirnseite der zentralen Ventileinheit (3f) eine axiale Nut (30) in der eine Dichtung (12a), vorzugsweise fliegend, platziert ist. Die Dichtung (12a) dichtet die Ventileinheit gegen die nicht angetriebene Radachse (16) in der Fig. 2 dynamisch und gegen die angetriebene Radwelle bzw. Antriebswelle (21, 24) in der Fig. 3 statisch ab, wenn die Ventilnadel (2b) durch die Ventilnadel (2c) der Fahrzeugachse bzw. der Fahrzeugwelle geöffnet wird.

Die zylindrische Außenmantelfläche der zentralen Ventileinheit (3f) wird vorzugsweise profiliert, um sie formschlüssig mit dem Felgenmaterial zu verbinden. Die auf dieser Weise vorgefertigte Ventileinheit (3f) mit ihren radialen Rohrleitungskanälen (9g) wird für die Fertigung der Felge als eine komplette Einheit so in die Gußform eingelegt, dass ihre Ventilachse (A₁) mit der Rotationsachse der Felge (A₁) übereinstimmt. Absätze in der Ventileinheit (3a, 3b, 3c, 3d, 3e, 3f) und im Einsatzring (33) sorgen für die zentrische Aufnahme der Felge bei ihrer späteren mechanischen Bearbeitung und Auswuchtung.

Gemäß Fig. 9 ist die Abdeckung (10d) der Ventileinheit (3a) durch ein Filmgelenk (36) an der in die Felgennabe einsetzbaren Ventileinheit (3a) angespritzt oder separat angefertigt und in die entsprechende Wulst oder Aussparung der Ventileinheit (3a) drehbeweglich, vorzugsweise ohne zusätzliche Befestigungselemente, hineingesteckt. Das Gelenk (36) ist eine Seite der eckigen Abdeckung oder eine Sehne der kreisrunden Abdeckung (10d). Die Innenseite der Ventilabdeckung (10d) besitzt runde (37) oder ballige bzw. tonnenförmige und vorzugsweise auch radial geschlitzte Hacken (38), die beim Schließen des Deckels (10d) in die innenseitige Nut (7c) und/oder außenseitige Nut (7b) des Ventilnippels oder in die innenseitige Nut der Aussparung (6a) um den Ventilnippel (7a) eingreifen und die Abdeckung (10d) form- oder reibschlüssig arretieren.

Ein Schließring (40), der im koaxialen Hohlraum (6a) und axial beweglich um das Ventil (2a) platziert ist und durch die Kraft der Feder (41) oder durch den vorhandenen Reifendruck im Kanal (9b) nach außen gedruckt wird, schnappt nach der Schließung der Abdeckung (10d) über den geschlitzten Ring (38) des Deckels und verhindert das ungewollte Öffnen der Abdeckung (10d). Mindestens eine Bohrung (39) im Deckel (10d) gegenüber dem Schließring (40) ermöglicht das Öffnen des Deckels durch Wegschieben des Schließringes mittels eines dünnen Stiftes durch eine der Bohrungen (39) hindurch.

Die in der Beschreibung, den Zeichnungen und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich.

## Patentansprüche

1. Fahrzeugfelge für mit Druckluft oder anderen Gasen befüllten Reifen durch ein mit Federrückstellkraft behaftetes, handelsübliches Druckluftzufuhr- und Rückschlagventil, das außerhalb des Felgenbetts platziert ist und das Druckmedium durch wenigstens eine Bohrung oder einen Rohrleitungskanal innerhalb der Felge oder Felgenspeiche in den Reifen führt,
**dadurch gekennzeichnet,**
**dass** das Felgenventil (2a, 2b) innen-, außen- oder beidseitig axial in eine zentrale Ventileinheit (3a, 3b, 3c, 3d, 3e, 3f) inmitten der zentralen Felgennabe eingesetzt ist, wobei das Druckmedium nach dem Felgenventil (2a, 2b) von einer axialen Bohrung (9a) über mindestens eine radiale Bohrung (9b) der Ventileinheit und von dort durch mindestens eine radiale Bohrung (9f) oder mindestens einen Rohrleitungskanal (9g) in der Felge oder in wenigstens einer der Felgenspeichen zum Felgenbett und in den Reifen gelangt.

2. Fahrzeugfelge nach Anspruch 1 **dadurch gekennzeichnet,**
**dass** die zentrale Ventileinheit (3a, 3b, 3c, 3d, 3e) inmitten der Felgennabe innen- oder außenseitig austauschbar eingesetzt ist und das Druckmedium über Kanäle (9a, 9b, 9c, 9d) der zentralen Ventileinheit in eine Umfangsnut (4) zwischen der zentralen Ventileinheit und der Felgennabe, vorzugsweise in einem konischen Bereich, und von dort durch mindestens eine radiale Bohrung (9f) in der Felge oder durch mindestens einen Rohrleitungskanal (9g) in der Felge oder in einer der Felgenspeichen zum Felgenbett (35) und in den Reifen führt.

3. Fahrzeugfelge nach Anspruch 1 **dadurch gekennzeichnet,**
**dass** die zentrale Ventileinheit (3f) mit mindestens einem sternförmig radial angeordneten, gerade oder räumlich gebogenen bzw. dreidimensional geformten Rohrleitungskanal (9g), der vorzugsweise aus rostfreiem ferritischen Stahl, einer Titan- oder Nickellegierung, aus keramischen Werkstoffen oder aus glasfaserverstärkten hitzebeständigen Kunststoffen besteht, einzeln oder zusammen ineinander gesteckt oder miteinander verbunden in die Gussform eingelegt und umgossen ist.

4. Fahrzeugfelge nach Anspruch 1 **dadurch gekennzeichnet,**
**dass** sich um das zum Fahrzeug hin zugewandte Felgenventil (2b) eine, in Bezug auf die Rotationsachse der Felge (A₁), koaxial angeordnete ringförmige axiale Nut (30) oder eine Umfangsnut befindet, in der eine dynamische (12a) oder statische (12b) Dichtung platziert ist, die die rotierende Felge (1) oder deren zentrale Ventileinheit (3b, 3c, 3f) gegen die feststehende Radachse (16) oder gegen die rotierende Antriebs- bzw. Gelenkwelle (21, 24) abdichtet.

5. Fahrzeugfelge nach Anspruch 2 **dadurch gekennzeichnet,**
**dass** bei der Herstellung der Felgennabe, insbesondere die mit der Umfangsnut (4) und den mit ihr verbundenen Rohrleitungskanälen (9g), ein mit radialen Bohrungen versehener Ring (33) zusammen mit den Rohrleitungen, vorzugsweise ineinander gesteckt, in die Gußform eingelegt und umgossen werden.

6. Fahrzeugfelge nach Anspruch 5 **dadurch gekennzeichnet,**
**dass** ein Zentralstück (32) mit entsprechender Anzahl von Radialbohrungen zur Aufnahme der Rohrleitungen (9g) vor deren Montage in den Ring (33) hinein gesteckt und nach dem Gießvorgang mit den überschüssigen Enden der Rohrleitungen heraus geschlagen wird.

7. Fahrzeugfelge nach einem der vorher genannten Ansprüche **dadurch gekennzeichnet,**
**dass** sich koaxial um das nach außen gerichtete Felgenventil (2a) ein ringförmiger Hohlraum (6a) befindet, der innen- oder außenseitig als Schlüsselansatz (6a) und/oder mit einer Nut (7a, 7b) für einen ersten Kupplungsteil, Dose (7a) oder Nippel (7b) zum Ankoppeln an einen zweiten Kupplungsteil, Nippel bzw. Dose, einer Druckluftkupplung gestaltet ist.

8. Fahrzeugfelge nach Anspruch 7 **dadurch gekennzeichnet,**
**dass** sich innerhalb des ringförmigen Raumes (6a) um das Ventil (2a) ein mechanisches Teil (28), Ring oder Stifte, befindet, dessen herausragende Länge vom Reifendruck abhängt und zum Entkoppeln der Druckluftkupplung und/oder zur Verriegelung der Ventilabdeckung (10d) dient.

9. Fahrzeugfelge nach einem der vorher genannten Ansprüche **dadurch gekennzeichnet,**
**dass** sich innerhalb der Radnabe oder innerhalb der zentralen Ventileinheit (3d) eine Energiequelle und/oder ein Drucksensor (25) befindet, der den Reifendruck misst und den Messwert Vorort analog (27) oder digital, z.B. durch kreisförmige Farbunterschiede (10c), anzeigt oder mittels Draht bzw. drahtlos an andere Einheiten wie z.B. an den Bordcomputer des Fahrzeuges weiterleitet.

10. Fahrzeugfelge nach Anspruch 9 **dadurch gekennzeichnet,**
**dass** die Farbänderung des Displays (10c) durch ein passives Bauelement wie z.B. ein Piezo-Element in Zusammenwirken mit dem vorhandenen Reifendruck zustande kommt.

11. Fahrzeugfelge nach einem der vorher genannten Ansprüche, **dadurch gekennzeichnet,**
**dass** das zentral angeordnete Ventil (2a) oder die Ventileinheit (3a, 3b, 3c, 3d, 3e, 3f) durch einen zu öffnenden und ver- bzw. abschließbaren Deckel abgedeckt ist, wobei die Abdeckung (10a, 10b, 10c, 10d) gelenkig an der Ventileinheit befestigt ist und das Gelenk (36) fertigungstechnisch Bestandteil der Ventileinheit (3a, 3b, 3c, 3d, 3e) ist, das beispielsweise in Form eines Filmgelenkes mit der Ventileinheit in einer mehrteiligen Spritzform gespritzt wird.

12. Fahrzeugfelge nach Anspruch 11 **dadurch gekennzeichnet,**
**dass** die Abdeckung (10a, 10b, 10c, 10d) der Ventileinheit (3a, 3b, 3c, 3d, 3e, 3f) die Anzeige des Manometers (10c, 27), analog oder digital, darstellt oder Angaben in Textform wie das Datum der Reifenmontage beinhaltet.

13. Fahrzeugfelge nach Anspruch 11 oder 12 **dadurch gekennzeichnet,**
**dass** die Innenseite der Abdeckung (10a, 10b, 10c, 10d) kreis- oder tonnenförmige Wülste (37) oder geschlitzte Krallen (38) aufweist, die beim Schließen in die korrespondierenden Umfangsnuten (7a, 7b, 7c) der Ventileinheit (3a, 3b, 3c, 3d, 3e, 3f) eingreifen und den Deckel arretieren.

14. Fahrzeugfelge nach Anspruch 13 **dadurch gekennzeichnet,**
**dass** ein axial beweglicher Ring (40) im ringförmigen Hohlraum (6a) um das zentrale Ventil (2a, 2b) durch Federkraft (41) oder durch den vorhandenen Reifendruck im Kanal (9b) auf die Arretierungssegmente (38) der Abdeckung (10d) geschoben wird und die Abdeckung gegen ungewolltes Öffnen sichert.

## Claims

1. Vehicle rim for tyres filled with compressed air or other gases, filled through a standard compressed air or non-return valve with a spring restoring force on the outside of the rim base, which feeds the pressure medium through at least one bore hole or one pipe duct within the rim or rim spoke into the tyre,
**characterised by** the fact
that the rim valve (2a, 2b) is placed internally, externally or bilaterally axial in a central valve unit (3a, 3b, 3c, 3d, 3e, 3f) right in the central rim hub, the pressure medium of which reaches the rim base and the tyre after the rim valve (2a, 2b) from an axial bore hole (9a) through at least one radial bore hole (9b) of the valve unit and from there through at least one radial bore hole (9f) or at least one pipe duct (9g) in the rim or at least in one of the rim spokes.

2. Vehicle rim according to claim 1, **characterised by** the fact
that the central valve unit (3a, 3b, 3c, 3d, 3e) is integrated in the centre of the rim hub in such a way that it can be exchanged from the inside and the outside and that the pressure medium is fed into the rim base (35) and into the tyre through channels (9a, 9b, 9c, 9d) of the central valve unit into a circumferential groove (4) between the central valve unit and the rim hub, preferably in a tapered area and from there through at least one radial bore hole (9f) in the rim or through at least one pipe duct (9g) in the rim or in one of the rim spokes.

3. Vehicle rim according to claim 1, **characterised by** the fact
that the central valve unit (3f) is placed into the mould (inserted into the other or connected to each other) and cast, with at least one radial, straight or spatially bent, respectively three dimensional pipe duct (9g) which preferably consists of ferritic stainless steel, a titanium or nickel alloy, ceramic materials or glass fibre reinforced and heat resistant plastic.

4. Vehicle rim according to claim 1, **characterised by** the fact that there is a coaxially arranged circular axial groove (30) or a circumferential groove around the rim valve (2b) facing the vehicle in relation to the axis of rotation of the rim (A₁), containing a dynamic (12a) or static (12b) gasket, sealing the rotating rim (1) or its central valve unit (3b, 3c, 3d) against the fixed axle (16) or against the rotating drive or cardan shaft (21, 24).

5. Vehicle rim according to claim 2, **characterised by** the fact that in the production of the rim hub, especially of the circumferential groove (4) and the connected pipe ducts (9g), a ring with radial bore holes (33) and the pipes, preferably inserted into one another, are placed in the mould and cast.

6. Vehicle rim according to claim 5, **characterised by** the fact that a central piece (32) with a respective amount of radial bore holes is inserted in the ring (33) in order to accommodate the pipe ducts (9g) before they are assembled and beaten out with the surplus ends of the pipe ducts after the casting process.

7. Vehicle rim according to one of the foregoing claims, **characterised by** the fact that there is a coaxial circular cavity (6a) around the rim valve (2a) facing outwards, which forms on the inner or outer side a screwdriver cap (6a) and/or is formed with a groove (7a, 7b) for a first coupling piece, socket (7a) or pin (7b) in order to connect it with a second coupling piece, socket and/or pin, of an air coupling.

8. Vehicle rim according to claim 7, **characterised by** the fact that there is a mechanical piece (28), ring or pins, within the circular cavity (6a) around the valve (2a) the protruding length of which depends on the tyre pressure and which is used for the decoupling of the air coupling and/or for the locking of the valve cover (10d).

9. Vehicle rim according to one of the foregoing claims, **characterised by** the fact
that there is an energy source and/or pressure sensor (25) within the hub or within the central valve unit (3d), measuring the tyre pressure and displaying the measured value analogously (27) or digitally on site, e.g. highlighting them through circular colour differences (10c) or transfering them by means of cable or wirelessly to other units, e.g. the board computer of the vehicle.

10. Vehicle rim according to claim 9, **characterised by** the fact
that the colour change of the display (10c) is caused by a passive construction part e.g. a piezo element in combination with the existing tyre pressure.

11. Vehicle rim according to one of the foregoing claims, **characterised by** the fact
that the centrally arranged valve (2a) or the valve unit (3a, 3b, 3c, 3d, 3e, 3f) is covered by an openable, closeable or lockable lid, the cover (10a, 10b, 10c, 10d) of which is attached to the valve unit using a moveable hinge and the hinge (36) being an integral part of the valve unit (3a, 3b, 3c, 3d, 3e) in the production which is e.g. cast as a live hinge including the valve unit in a multipiece injection mould.

12. Vehicle rim according to claim 11, **characterised by** the fact
that the cover (10a, 10b, 10c, 10d) of the valve unit (3a, 3b, 3c, 3d, 3e, 3f) displays the data of the pressure gauge (10c, 27) analogously or digitally or contains data in text format such as the date when the tyre was mounted.

13. Vehicle rim according to claim 11 or 12, **characterised by** the fact
that the inside of the cover (10a, 10b, 10c,10d) shows circular or barrel shaped beads (37) or slotted claws (38) which engage with the corresponding circumferential grooves (7a, 7b, 7c) of the valve unit (3a, 3b, 3c, 3d, 3e, 3f) in the closing process and lock the cover.

14. Vehicle rim according to claim 13, **characterised by** the fact
that an axial moveable ring (40) is pushed around the central valve (2a, 2b) in the circular cavity (6a) with spring force (41) or with the existing tyre pressure in the channel (9b) onto the locking elements (38) of the cover (10d) and secures the cover against unintentional opening.

## Revendications

1. Jante de véhicule pour pneus remplis d'air comprimé ou d'autres gaz, le remplissage étant effectué par une soupape d'amenée d'air comprimé et de retenue équipée d'un retour par ressort usuel qui est positionnée à l'extérieur du fond de jante et introduit le milieu de pression dans le pneu par au moins un trou ou une conduite située à l'intérieur de la jante ou du rayon de la jante,
**caractérisé par le fait**
**que** la soupape (2a, 2b) soit intégrée de manière axiale (ou bien du côté intérieur, ou bien du côté extérieur ou des deux côtés) dans une unité de soupape centrale (3a, 3b, 3c, 3d, 3e, 3f) qui se trouve au sein du moyeu de jante central, le milieu de pression étant conduit vers le fond de jante et vers le pneu en aval de la soupape de jante (2a, 2b) depuis un trou axial (9a) par au moins un trou radial (9b) de l'unité de soupape, et de ce point-là par au moins un trou radial (9f) ou au moins une conduite (9g) qui se trouve dans la jante ou au moins dans l'un des rayons de la jante.

2. Jante de véhicule, selon l'exigence n° 1 **caractérisée par le fait**
**que** l'unité de soupape centrale (3a, 3b, 3c, 3d, 3e) soit intégrée dans le moyeu de jante ou bien du côté intérieur, ou bien du côté extérieur, et cela de manière interchangeable, et qu'elle conduise le milieu de pression par les canaux (9a, 9b, 9c, 9d) de l'unité de soupape centrale vers une rainure périphérique (4) qui se trouve entre l'unité de soupape centrale et le moyeu de jante, de préférence dans une zone conique, et de ce point-là vers le fond de jante (35) et vers le pneu par au moins un trou radial (9f) dans la jante ou par au moins une conduite (9g) qui se trouve dans la jante ou dans l'un des rayons de la jante.

3. Jante de véhicule, selon l'exigence n° 1 **caractérisée par le fait**
**que** l'unité de soupape centrale (3f) soit intégrée ou refondue dans le moule avec au moins une conduite (9g) en étoile ou bien orientée de manière radiale, ou bien sous forme droite, ou bien courbée dans l'espace ou façonnée de manière tridimensionnelle, de préférence composée d'acier inoxydable et ferritique, d'un alliage de titane ou de nickel, de matériaux céramiques ou de matières plastiques renforcées par des vibres de verre et résistantes à la chaleur, cette unité de soupape centrale et la conduite étant soit séparées, soit assemblées, soit attachées l'une à l'autre.

4. Jante de véhicule, selon l'exigence n° 1 **caractérisée par le fait que** la soupape de jante (2b) orientée vers le véhicule soit entourée d'une rainure axiale annulaire (30) mise en place de manière coaxiale par rapport à l'axe de rotation de la jante (A₁) ou d'une rainure périphérique dans laquelle est positionné un joint dynamique (12a) ou statique (12b) qui étanche la jante tournante (1) ou son unité de soupape centrale (3b, 3c, 3f) contre l'essieu rigide (16) ou contre l'arbre de transmission ou l'arbre articulé (21, 24) tournant.

5. Jante de véhicule, selon l'exigence n° 2 **caractérisée par le fait**
**que**, lors de la fabrication du moyeu de jante, en particulier en ce qui concerne la rainure périphérique (4) et les conduites attachées à celle-ci, une bague équipée de trous radiaux (33) soit intégrée et refondue dans le moule conjointement avec les conduites, de préférence sous forme assemblée.

6. Jante de véhicule, selon l'exigence n° 5 **caractérisée par le fait**
**qu'**une pièce centrale (32) avec un nombre raisonnable de trous radiaux aptes à la réception des conduites (9g) soit insérée dans la bague (33) avant le montage des conduites et enlevée après la procédure de moulage conjointement avec les extrémités superflues des conduites.

7. Jante de véhicule, selon l'une des exigences mentionnées ci-dessus **caractérisée par le fait**
**qu'**une cavité annulaire (6a) entoure de manière coaxiale la soupape de jante orientée vers l'extérieur (2a) et soit façonnée, ou bien du côté intérieur, ou bien du côté extérieur, comme embout (6a) et/ou équipée d'une rainure (7a, 7b) pour le raccordement d'une première partie d'embrayage, d'une boîte (7a) ou d'un raccord fileté (7b) à une deuxième partie d'embrayage, à une boîte et/ou à un raccord fileté d'un embrayage pneumatique.

8. Jante de véhicule, selon l'exigence n° 7 **caractérisée par le fait**
**qu'**une pièce mécanique (28), une bague ou des goupilles situées à l'intérieur de l'espace annulaire (6a) entourent la soupape (2a), dont la longueur saillante dépend de la pression de pneu et sert à débrayer l'embrayage pneumatique et/ou à bloquer le couvercle de la soupape (10d).

9. Jante de véhicule, selon l'une des exigences mentionnées ci-dessus **caractérisée par le fait**
**qu'**il y ait une source d'énergie et/ou un capteur de pression (25) à l'intérieur du moyeu de roue ou à l'intérieur de l'unité de soupape centrale (3d) qui mesure la pression de pneu et indique la valeur mesurée sur site de manière analogue (27) ou numérique, p.ex. à l'aide de différences de couleur circulaires (10e), ou la transmet par un fil ou sans fil à d'autres unités telles que l'ordinateur de bord du véhicule.

10. Jante de véhicule, selon l'exigence n° 9 **caractérisée par le fait**
**que** le changement de couleur de l'écran (10c) s'effectue à l'aide d'un composant passif, p.ex. d'un élément piézo-électrique qui interagit avec la pression de pneu existante.

11. Jante de véhicule, selon l'une des exigences mentionnées ci-dessus **caractérisée par le fait**
**que** la soupape centrale (2a) ou l'unité de soupape (3a, 3b, 3c, 3d, 3e, 3f) soit protégée par un couvercle que l'on peut ouvrir et fermer/verrouiller, ce couvercle (10a, 10b, 10c, 10d) étant attaché à l'unité de soupape de manière articulée et la charnière (36) faisant partie de l'unité de soupape (3a, 3b, 3c, 3d, 3e) du point de vue de la technique de fabrication et étant, par exemple, moulée par injection dans un moule à injection pluripartite conjointement avec l'unité de soupape et sous forme d'une charnière-film.

12. Jante de véhicule, selon l'exigence n° 11 **caractérisée par le fait**
**que** le couvercle (10a, 10b, 10c, 10d) de l'unité de soupape (3a, 3b, 3c, 3d, 3e, 3f) affiche les données du manomètre (10e, 27) de manière analogue ou numérique ou contienne des données textuelles telles que la date de montage des pneus.

13. Jante de véhicule, selon les exigences n° 11 ou n°12 **caractérisée par le fait**
**que** le côté intérieur du couvercle (10a, 10b, 10c, 10d) présente des bourrelets circulaires ou en forme de tonne (37) ou des griffes rainurées (38) qui, lors de la fermeture, entrent dans les rainures périphériques (7a, 7b, 7c) correspondantes de l'unité de soupape (3a, 3b, 3c, 3d, 3e, 3f) et bloquent le couvercle.

14. Jante de véhicule, selon l'exigence n° 13 **caractérisée par le fait**
**qu'**une bague axialement mobile (40) qui se trouve dans la cavité annulaire (6a) et entoure la soupape centrale (2a, 2b) soit poussée et positionnée sur les segments de blocage (38) du couvercle (10d) par la force de ressort (41) ou par la pression de pneu présente dans le canal (9b), afin d'éviter toute ouverture involontaire du couvercle.
